# EUROPÄISCHE PATENTSCHRIFT

(11) **EP 0 829 635 B1**
(45) Veröffentlichungstag und Bekanntmachung des Hinweises auf die Patenterteilung: **23.10.2002**
(21) Anmeldenummer: 97113731.0
(22) Anmeldetag: 08.08.1997
(51) Int. Cl.: F02D 41/26

(54) **Steuersystem für ein Kraftfahrzeug**
Control system for a motor vehicle
Système de commande pour véhicule à moteur

(30) Priorität: 12.09.1996 DE 19637088
(43) Veröffentlichungstag der Anmeldung: 18.03.1998
(73) Patentinhaber: Siemens Aktiengesellschaft, 80333 München (DE)
(72) Erfinder: Hopf, Thomas, 64625 Bensheim (DE)

(56) Entgegenhaltungen:
- EP-A- 0 529 274
- US-A- 4 322 630
- US-A- 4 437 342
- US-A- 4 817 418
- US-A- 4 884 206
- US-A- 4 911 132
- PATENT ABSTRACTS OF JAPAN Bd. 008, Nr. 211 (P-303) 26 September 1984 & JP 59 094 121 A (MEIDENSHA KK) 30 Mai 1984

## Beschreibung

Die Erfindung betrifft ein Steuersystem für ein Kraftfahrzeug gemäß dem Oberbegriff des Patentanspruchs 1.

Es ist eine Datenverarbeitungsanlage für Kraftfahrzeuge bekannt, bei welcher mehrere Steuergeräte über eine Datenübertragungsleitung Daten austauschen, wobei wenigstens eine Steuereinheit Betriebsparameter erfaßt und zu Steuerparametem verarbeitet.

Zur Ermittlung einiger Steuerparameter ist es notwendig, festzustellen, wieviel Zeit nach Abschalten des Motorbetriebes vergangen ist. Zu diesem Zweck ist im Steuergerät selbst ein Zähler angeordnet, mit dem diese Zeit berechnet wird.

Um den Betrieb des Zählers zu gewährleisten, muß das Steuergerät nach Abschalten des Motors weiter über die Batterie bestromt werden. Über mehrere Stunden führt dies zu Versorgungsproblemen, da die Fahrzeugbatterie entladen wird.

Aus US 4,884,206 A ist ein Steuersystem bekannt, welches aus Computer oder elektrischen Auswerte- und/oder Steuerschaltungen besteht, die mit externen Zeitgebern verbunden sind, die nicht Teil des Steuersystems sind. Dabei ist in US 4,911,132 A und JP-A-59 094 121 offenbart, daß die Steuereinheit Zeitparameter speichert, welche ihr über eine Datenleitung zugeführt werden. Die Steuereinheit kann dabei als zentrale Motorelektronik ausgebildet sein.

Der Erfindung liegt somit die Aufgabe zugrunde, ein Steuersystem anzugeben, bei welchem ein Zeitsignal jederzeit zur Verfügung steht, ohne daß das Spannungsversorgungssystem des Kraftfahrzeuges bei abgeschaltetem Motor belastet wird.

Erfindungsgemäß wird die Aufgabe durch die Merkmale des Patentanspruchs 1 gelöst.

Vorteilhafterweise ist die Zeitgeberschaltung in einem zweiten Steuergerät angeordnet.

Der Vorteil der Erfindung besteht darin, daß eine bereits vorhandene Zeitgeberschaltung genutzt wird, um Steuerparameter mit Hilfe des Steuergerätes zu ermitteln.

Eine separate Zeitgeberschaltung in diesem Steuergerät entfällt. Somit ist auch keine Stromversorgung außerhalb des Fahrbetriebes notwendig.

In einer Ausgestaltung sind das Motorsteuergerät und das zweite Steuergerät über eine Datenübertragungsleitung miteinander verbunden. Die Datenübertragungsleitung kann vorteilhafterweise ein CAN-Bus sein.

Alternativ sind das Motorsteuergerät und das zweite Steuergerät über eine Schnittstellenschaltung zum Auslesen des Zeitparameters miteinander verbunden.

Somit ist auch zur Datenübertragung kein zusätzlicher Aufwand notwendig, da derartige Übertragungseinrichtungen in modernen Kraftfahrzeugen vorhanden sind.

Auf besonders einfache Art und Weise kann die Zeit ermittelt werden, wenn der Zeitparameter über die Datenübertragungsleitung einer Speichereinheit des Motorsteuergerätes zuführbar ist und der abgespeicherte Zeitparameter aus der Speichereinheit für die spätere Auswertung ausgelesen wird. Dabei ist mindestens ein Steuergerät mit einer Einrichtung verbunden, welche ein zusätzliches Signal zur Speicherung des Zeitparameters liefert.

Bei der Anwendung der Erfindung in einem Kraftfahrzeug ist das zweite Steuergerät die Steuerelektronik eines Kombinationsinstrumentes eines Kraftfahrzeuges.

Bei einem Verfahren zur Bestimmung eines Steuerparameters für ein Kraftfahrzeug mit Hilfe eines Zeitparameters mittels der Anordnung nach Anspruch 1 wird mit Hilfe eines zusätzlichen Signals bestimmt, zu welchem Zeitpunkt der Zeitparameter übertragen bzw. gespeichert wird. Das zusätzliche Signal ist vorteilhafterweise ein am Steuergerät anliegender Betriebsparameter.

In einer Ausgestaltung ist der Betriebsparameter die Zündung, wobei bei Einund Ausschalten der Zündung des Kraftfahrzeuges der Zeitparameter vom zweiten zum ersten Steuergerät übertragen und dort abgespeichert wird.

In einer anderen Ausgestaltung ist der Betriebsparameter die Motordrehzahl, wobei beim Auftreten einer bestimmten Motordrehzahl der Zeitparameter übertragen und abgespeichert wird.

Eine Motorabstellzeit wird aus der Differenz des aktuellen übertragenen Zeitparameters mit dem abgespeicherten Zeitparameter bestimmt.

Somit kann mit im Kraftfahrzeug an sich vorhandenen Signalen eine Zeitermittlung einfach und komfortabel durchgeführt werden.

Die Erfindung läßt zahlreiche Ausführungsbeispiele zu. Eine davon ist in den in der Zeichnung dargestellten Figuren schematisch dargestellt.

Es zeigt:
- Fig. 1:: erste Ausführungsform der Erfindung
- Fig. 2:: zweite Ausführungsform der Erfindung

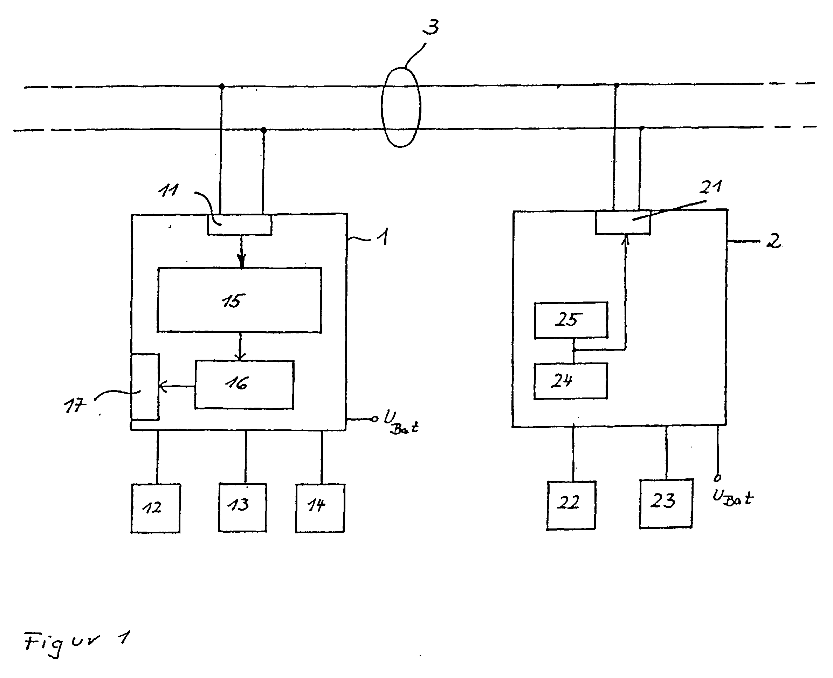

Bei der in der Figur 1 gezeigten Ausführungsform sind eine Motor-Steuereinheit 1 sowie eine Steuereinheit 2 für ein Kombinationsinstrument über einen Bus 3 (beispielsweise einen CAN-Bus) in einem Kraftfahrzeug verbunden. Die Motor-Steuereinheit 1 übernimmt Steuer- und Regelungsfunktionen für die Antriebsmaschine des Kraftfahrzeuges, während die Steuereinheit 2 für das Kombinationsinstrument bestimmte Betriebsparameter des Kraftfahrzeuges, wie Geschwindigkeit, Motordrehzahl, Kühlmitteltemperatur sowie Funktionen wie Betätigung des Blinklichtschalters, detektiert und anzeigt.

Die beschriebenen Steuergeräte sind vom Aufbau her und von ihrer Funktion her an sich bekannt, so daß im folgenden zur Verdeutlichung der Erfindung nur die wesentlichen Komponenten angesprochen werden, wobei weitere für die Kombination erforderliche Komponenten vorhanden sein können.

Die Motorsteuereinheit 1 weist einen Busanschluß 11 auf, mit dem dieser an dem Bus 3 angeschlossen ist. Zur Erfassung einer Leistungsanforderung ist ein Pedalstellungsgeber 12 und zur Erfassung der eingestellten Leistung ein Drosselklappenstellungsgeber 13 vorgesehen. Außerdem ist die Motorsteuereinheit 1 mit einem im Abgaskanal des Kraftfahrzeuges angeordneten Sensor 14 verbunden.

Die Steuereinheit 2 für das Kombinationsinstrument weist ebenfalls einen Busanschluß 21 auf. Weiterhin ist er mit einem Sensor für die Motordrehzahl 22 und dem Zündschalter 23 verbunden.

In dieser Steuereinheit 2 ist eine an sich bekannte, autonom arbeitende Uhrenschaltung 24 vorgesehen, die alle für eine Quarzuhr notwendigen Schaltungen enthält. Ein Ausgang der Uhrenschaltung 24 ist mit einem Flüssigkristalldisplay 25 verbunden, mittels welchem dem Fahrer im Cockpit die Uhrzeit angezeigt wird. Dieses Display 25 kann aber auch zur Anzeige anderer Parameter genutzt werden. Ein zweiter Ausgang der Uhrenschaltung 24 führt an den Busanschluß 21 des Steuergerätes 2.

In Steuergeräten in Kraftfahrzeugen werden üblicherweise im Bereich der Anzeige und Überwachung wie auch bei Steuer- und Regelvorgängen Mikroprozessoren verwendet.

Die im Steuergerät 2 enthaltene Uhrenschaltung 24 kann somit auch ein Mikroprozessor sein, welcher auch andere Aufgaben bei der Überwachung und Anzeige des Kraftfahrzeuges übernimmt.

Die Uhrenschaltung 24 kann aber auch eine von an sich bekannten integrierten Schaltungen für Uhren, insbesondere für Quarzuhren sein.

Die Motorsteuereinheit 1 weist ebenfalls einen Mikrocomputer 15 auf, der mit der Uhrenschaltung der Steuereinheit 2 über dem Bus 3 kommuniziert.

Es ist bekannt, daß die Kraftstoffzumessung in Abhängigkeit von der Abgaszusammensetzung erfolgt. Die Abgasnachbehandlung findet dabei in einem Katalysator statt. Das Signal über die Abgaszusammensetzung wird dabei dem Motorsteuergerät von der Abgassonde 14 zugeführt, welches in Abhängigkeit davon die Einspritzung des Kraftstoffes steuert. Um beim Start möglichst genaue Betriebsbedingungen zugrundelegen zu können, sind Aussagen über den Wirkungsgrad des Katalysators notwendig.

Im vorliegenden Fall soll die Zeit ermittelt werden, die seit dem Ausschalten des Fahrzeugmotors vergangen ist. Mit Hilfe dieser Zeit wird dann die Katalysator-Temperatur des Motors beim Neustart berechnet. Eine Tabelle, welche im Mikrocomputer 15 der Motor-Steuereinheit 1 abgelegt ist, weist einen Zusammenhang der Katalysator-Temperatur und der Motorabstellzeit bis 24 Stunden auf.

Mit dem Signal "Zündung aus" des Zündschalters 23 am Steuergerät 2 wird an das Motorsteuergerät 1 über dem Bus 3 die aktuelle Zeit übertragen, welche im Speicher 16 der Motor-Steuerelektronik 1 abgelegt wird. Wird durch das Kombi-Steuergerät 2 am Zündschalter 23 das Signal "Zündung an" detektiert, wird wiederum die aktuelle Zeit an das Motor-Steuergerät 1 übertragen. Der Mikrocomputer 15 des Motor-Steuergerätes 1 ermittelt aus der aktuellen Zeit und der abgespeicherten Zeit beim Motorabstellen eine Zeitdifferenz, die Motorabstellzeit. Mit Hilfe dieser Motorabstellzeit wird aus der Tabelle die zugehörige Katalysator-Temperatur ausgelesen. Diese Katalysator-Temperatur wird über die Schnittstelle 17 einer Einspritzregelung zugeführt und dort weiterverarbeitet.

Das Zeitsignal kann aber auch beim Vorliegen einer bestimmten Motordrehzahl übertragen werden, die so gewählt wird, daß sicher auf ein Aus- oder Anschalten des Motors geschlossen werden kann.

In einer anderen Ausführung wird das Zeitsignal ab Anlegen der Betriebsspannung U_{Bat} ständig an die Motor-Steuerelektronik übertragen und nur bei der entsprechenden Motordrehzahl bzw. bei dem Signalzündschalter "ein oder aus" im Speicher 16 der Motor-Steuerelektronik 1 abgelegt. Dazu ist es aber notwendig, daß vom Kombi-Steuergerät 2 auch das Drehzahlsignal (Sensor 22) bzw. die Information über eine geänderte Stellung des Zündschalters (Sensor 23) übertragen wird.

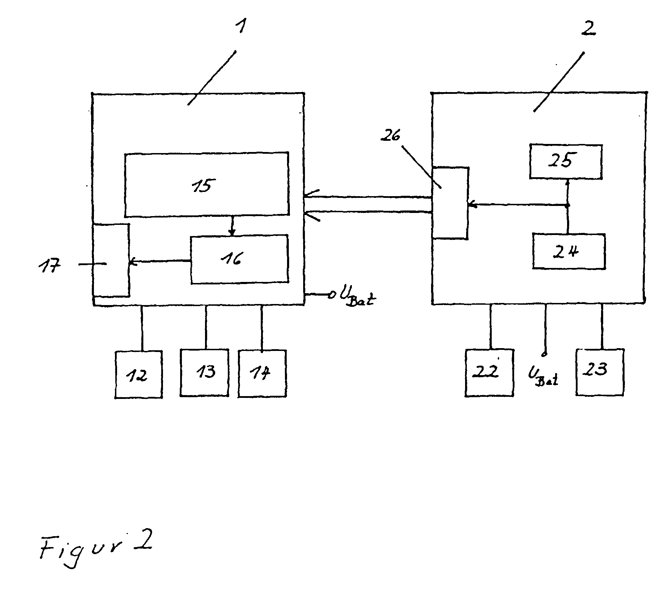

Das in Figur 2 dargestellte Motor-Steuergerät und das Kombi-Steuergerät 2 weisen denselben Aufbau auf wie in Figur 1. Das Kombi-Steuergerät 2 weist zusätzlich eine Schnittstelle 26 auf, über die die oben diskutierten Signale an das Motor-Steuergerät 1 übertragen werden.

Mit Hilfe der dargelegten Anordnung ist es möglich, ohne zusätzlichen Aufwand ein Zeitsignal im Motor-Steuergerät zu verarbeiten.

## Patentansprüche

1. Steuersystem für ein Kraftfahrzeug, mit mindestens einem Motorsteuergerät, welches zur Erzeugung von Steuerparametern mit einer Zeitgeberschaltung zur Erzeugung eines Zeitparameters in Verbindung steht, wobei die Zeitgeberschaltung außerhalb des Motorsteuergerätes angeordnet ist, **dadurch gekennzeichnet, daß** bei einem das Abschalten des Motors entsprechenden Signales, z.B. Zündung aus, ein von der Zeitgeberschaltung abgegebener erster Zeitparameter im Motorsteuergerät (1) gespeichert wird, bei einem das Einschalten des Motors kennzeichnenden Signal, z.B. Zündung an, ein von der Zeitgeberschaltung (24) bereitgestellter zweiter Zeitparameter (24) ebenfalls im Motorsteuergerät (1) gespeichert wird, wobei eine aus dem ersten und zweiten Zeitparameter im Motorsteuergerät (1) ermittelte Zeitdifferenz als Steuerparameter des Motorsteuergerätes (1) genutzt wird.

2. Steuersystem nach Anspruch 1, **dadurch gekennzeichnet, daß** die Zeitgeberschaltung in einem zweiten Steuergerät angeordnet ist.

3. Steuersystem nach Anspruch 2, **dadurch gekennzeichnet, daß** das Motorsteuergerät (1) und das zweite Steuergerät (2) über eine Datenübertragungsleitung (3) miteinander verbunden sind.

4. Steuersystem nach Anspruch 3, **dadurch gekennzeichnet, daß** die Datenübertragungsleitung (3) ein CAN-Bus ist.

5. Steuersystem nach Anspruch 2, **dadurch gekennzeichnet, daß** das Motorsteuergerät (1) und das zweite Steuergerät (2) über eine Schnittstellenschaltung (11, 21) zum Auslesen des Zeitparameters miteinander verbunden sind.

6. Steuersystem nach einem der vorhergehenden Ansprüche 1 bis 5, **dadurch gekennzeichnet, daß** der Zeitparameter über die Datenübertragungsleitung (3) einer Speichereinheit des Motorsteuergerätes (1) zuführbar ist und der abgespeicherte Zeitparameter aus der Speichereinheit für die spätere Auswertung ausgelesen wird.

7. Steuersystem nach Anspruch 6, **dadurch gekennzeichnet, daß** mindestens ein Steuergerät mit einer Einrichtung verbunden ist, welche ein zusätzliches Signal zur Speicherung des Zeitparameters liefert.

8. Steuersystem nach einem der vorhergehenden Ansprüche 1 bis 7, **dadurch gekennzeichnet, daß** das zweite Steuergerät (2) die Steuerelektronik eines Kombinationsinstrumentes eines Kraftfahrzeuges ist.

9. Verfahren zur Bestimmung eines Steuerparameters für ein Kraftfahrzeug mit Hilfe eines Zeitparameters mittels der Anordnung nach Anspruch 1, **dadurch gekennzeichnet, daß** mit Hilfe eines zusätzlichen Signals bestimmt wird, zu welchem Zeitpunkt der Zeitparameter übertragen bzw. abgespeichert wird.

10. Verfahren nach Anspruch 9, **dadurch gekennzeichnet, daß** das zusätzliche Signal ein am Steuergerät anliegender Betriebsparameter ist.

11. Verfahren nach Anspruch 10, **dadurch gekennzeichnet, daß** der Betriebsparameter die Zündung ist, wobei beim Ein- und Ausschalten der Zündung des Kraftfahrzeuges der Zeitparameter vom zweiten zum Motorsteuergerät übertragen und/oder abgespeichert wird.

12. Verfahren nach Anspruch 12, **dadurch gekennzeichnet, daß** der Betriebsparameter die Motordrehzahl ist, wobei beim Auftreten einer bestimmten Motordrehzahl der Zeitparameter übertragen und/oder abgespeichert wird.

13. Verfahren nach einem der vorhergehenden Ansprüche 9 bis 12, **dadurch gekennzeichnet, daß** eine Motorabstellzeit aus der Differenz des aktuellen übertragenen Zeitparameters und des abgespeicherten Zeitparameters bestimmt wird.

## Claims

1. Control system for a motor vehicle, having at least one engine control unit which, in order to generate control parameters, is connected to a time generator circuit for generating a time parameter, the time generator circuit being arranged outside the engine control unit, **characterized in that** in the case of a signal, for example ignition off, corresponding to the switching off of the engine, a first time parameter is output by the timing signal generator circuit is stored in the engine control unit (1), in the case of a signal, for example ignition on, characterizing the switching on of the engine, a second time parameter (24) which is made available by the time generator circuit (24) is also stored in the engine control unit (1), a time difference determined from the first and second time parameters in the engine control unit (1) being utilized as a control parameter of the engine control unit (1).

2. Control system according to Claim 1, **characterized in that** the time generator circuit is arranged in a second control unit.

3. Control system according to Claim 2, **characterized in that** the engine control unit (1) and the second control unit (2) are connected to one another via a data transmission line (3).

4. Control system according to Claim 3, **characterized in that** the data transmission line (3) is a CAN bus.

5. Control system according to Claim 2, **characterized in that** the engine control unit (1) and the second control unit (2) are connected to one another via an interface circuit (11, 21) for reading out the time parameter.

6. Control system according to one of the preceding Claims 1 to 5, **characterized in that** the time parameter can be fed to a memory unit of the engine control unit (1) via the data transmission line (3) and the stored time parameter is read out of the memory unit for later evaluation.

7. Control system according to Claim 6, **characterized in that** at least one control unit is connected to a device which supplies an additional signal for storage of the time parameter.

8. Control system according to one of the preceding Claims 1 to 7, **characterized in that** the second control unit (2) is the electronic control system of an instrument cluster of a motor vehicle.

9. Method for determining a control parameter for a motor vehicle using a time parameter by means of the arrangement according to Claim 1, **characterized in that** an additional signal is used to determine the time at which the time parameter is transmitted or stored.

10. Method according to Claim 9, **characterized in that** the additional signal is an operating parameter which is present at the control unit.

11. Method according to Claim 10, **characterized in that** the operating parameter is the ignition, the time parameter being transmitted from the second unit to the engine control unit and/or stored when the ignition of the motor vehicle is switched on and off.

12. Method according to Claim 12, **characterized in that** the operating parameter is the engine speed, the time parameter being transmitted and/or stored when a specific engine speed occurs.

13. Method according to one of the preceding Claims 9 to 12, **characterized in that** an engine shut-down time is determined from the difference between the current transmitted time parameter and the stored time parameter.

## Revendications

1. Système de commande pour un véhicule automobile, comportant au moins un appareil de commande de moteur, relié, pour engendrer des paramètres de commande, à un circuit d'horloge destiné à engendrer un paramètre de temps, le circuit d'horloge étant disposé à l'extérieur de l'appareil de commande de moteur, **caractérisé en ce que** dans le cas d'un signal correspondant à la mise hors service du moteur, par exemple d'allumage coupé, un premier paramètre de temps, délivré par le circuit d'horloge, est mémorisé dans l'appareil de commande de moteur (1), dans le cas d'un signal correspondant à la mise en service du moteur (par exemple mise en service de l'allumage), un deuxième paramètre de temps (24), fourni par le circuit d'horloge (24), est également mémorisé dans l'appareil de commande de moteur (1), une différence de temps, déterminée à partir des premier et deuxième paramètres de temps dans l'appareil de commande de moteur (1), étant utilisée en tant que paramètre de commande de l'appareil de commande de moteur (1).

2. Système de commande selon la revendication, **caractérisé en ce que** le circuit d'horloge est disposé dans un deuxième appareil de commande.

3. Système de commande selon la revendication 2, **caractérisé en ce que** l'appareil de commande de moteur (1) et le deuxième appareil de commande (2) sont reliés entre eux par une ligne de transmission de données (3).

4. Système de commande selon la revendication 3, **caractérisé en ce que** la ligne de transmission de données (3) est un bus CAN.

5. Système de commande selon la revendication 2, **caractérisé en ce que** l'appareil de commande de moteur (1) et le deuxième appareil de commande (2) sont reliés entre eux par l'intermédiaire d'un circuit d'interface (11, 21) pour lire le paramètre de temps.

6. Système de commande selon l'une dès revendications 1 à 5, **caractérisé en ce que** le paramètre de temps peut être appliqué, par la ligne de transmission de données (3), à une unité mémoire de l'appareil de commande de moteur (1) et le paramètre de temps mémorisé est extrait de l'unité mémoire, pour l'évaluation ultérieure.

7. Système de commande selon la revendication 6, **caractérisé en ce qu'**au moins un appareil de commande est relié à un dispositif qui fournit un signal supplémentaire pour la mémorisation du paramètre de temps.

8. Système de commande selon l'une des revendications 1 à 7, **caractérisé en ce que** le deuxième appareil de commande (2) est l'électronique de commande d'un instrument combiné d'un véhicule automobile.

9. , Procédé de détermination d'un paramètre de commande pour un véhicule automobile à l'aide d'un paramètre de temps, en utilisant le dispositif selon la revendication 1, **caractérisé en ce qu'**à l'aide d'un signal supplémentaire on détermine à quel moment le paramètre de temps est transmis ou mémorisé.

10. Procédé selon la revendication 9, **caractérisé en ce que** le signal supplémentaire est un paramètre de fonctionnement appliqué à l'appareil de commande.

11. Procédé selon la revendication 10, **caractérisé en ce que** le paramètre de fonctionnement est l'allumage, le paramètre de temps étant transmis deux fois par l'appareil de commande de moteur et/ou mémorisé lors de la mise en service et hors service de l'allumage du véhicule automobile,.

12. Procédé selon la revendication 12, **caractérisé en ce que** le paramètre de fonctionnement est la vitesse de rotation du moteur, le paramètre de temps étant transmis et/ou mémorisé lorsque la vitesse de rotation du moteur atteint une valeur prédéterminée.

13. Procédé selon l'une des revendications 9 à 12, **caractérisé en ce qu'**un temps de coupure de moteur est déterminé à partir de la différence entre le paramètre de temps actuel transmis et le paramètre de temps mémorisé.
